# EUROPÄISCHE PATENTSCHRIFT

(11) **EP 0 802 752 B1**
(45) Veröffentlichungstag und Bekanntmachung des Hinweises auf die Patenterteilung: **29.07.1998**
(21) Anmeldenummer: 96900972.9
(22) Anmeldetag: 24.01.1996
(51) Int. Cl.: A47J 27/09

(54) **DRUCKANZEIGER**
PRESSURE INDICATOR
INDICATEUR DE PRESSION

(30) Priorität: 25.01.1995 DE 29501112 U
(43) Veröffentlichungstag der Anmeldung: 29.10.1997
(73) Patentinhaber: HEINRICH BAUMGARTEN KG SPEZIALFABRIK FÜR BESCHLAGTEILE, 57290 Neunkirchen (DE)
(72) Erfinder: FISCHBACH, Wolfgang, D-57567 Daaden (DE)
(74) Vertreter: Missling, Arne, Dipl.-Ing.
(86) Internationale Anmeldenummer: EP9600285
(87) Internationale Veröffentlichungsnummer: WO9622717

(56) Entgegenhaltungen:
- CH-A- 283 703
- CH-A- 398 922
- DE-A- 2 440 157
- DE-A- 2 834 397
- DE-A- 3 027 057

## Beschreibung

Die Erfindung betrifft einen Druckanzeiger für ein Kochgefäß oder dergleichen, beispielsweise einen Dampfdrucktopf, mit einem Anzeigestift, der längsbeweglich in einem Haltestück angeordnet ist, das Kaltestück aus einem Befestigungsstück, einem von dem Befestigungsstück abragenden Rohrstück und einem das Rohrstück abschließenden Stirnstück zusammengesetzt ist, wobei der Anzeigestift aus einem Schaft und einem Steuerflansch besteht und in einer als äußerer Anschlag dienenden vorderen Stirnwand in dem Befestigungsstück und ferner in dem Stirnstück in einer als innerer Anschlag dienenden hinteren Stirnwand gelagert ist, wobei die Stirnwände von Öffnungen durchbrochen sind, die durch den anschlagenden Steuerflansch entweder verschlossen oder nicht beeinflußt werden, die hintere Stirnwand elastisch ausgebildet ist und der innere Anschlag in beiden Richtungen von dem Steuerflansch überwindbar und an dem Stirnstück eine Hubbegrenzung für den Steuerflansch vorgesehen ist.

Ein solcher Druckanzeiger ist beispielsweise aus der DE-A-30 27 057 vorbekannt. Dieser Druckanzeiger ist lediglich in der Lage, anzuzeigen, ob im Topf ein Überdruck herrscht oder aber, ob der Topf drucklos ist. Als Druckanzeiger, der für das Kochen benutzt werden kann, ist dieses bekannte Sicherheitsventil jedoch nicht geeignet.

Des weiteren werden Druckanzeiger benötigt, die anzeigen, wie hoch der momentan im Dampfdruckkochtopf herrschende Druck ist. Ein derartiger Druckanzeiger besitzt in bekannter Weise einen gegen eine Rückstellkraft axial verstellbaren Anzeigestift in einer Durchführung in der Gefäßwand des Kochgefäßes, insbesondere in dem Deckel, wobei dieser derart verschiebbar ist, daS er bei zunehmendem Druck aus dem Kochgefäß ausgetrieben wird, so daS die Länge des Anzeigestiftes über der Gefäßwand den Druck in dem Kochgefäß veranschaulicht.

Druckanzeiger dieser Art sind seit langem bekannt und in großem Umfang in Gebrauch. Auf dem Anzeigestift befinden sich in der Regel mehrere, gegebenenfalls unterschiedlichen Rückstellkräften zugeordnete und zumeist eingefärbte Rillen, die zur Beobachtung des Druckes dienen. Ein solcher Druckanzeiger besteht aus mehreren metallischen Einzelteilen und zugehörigen gummielastischen Dichtelementen; obwohl es sich bei dem Metallteilen außer bei der Rückstellfeder um spanend herzustellende Drehteile handelt, die auf Automaten angefertigt werden können, ist der Aufwand für die Anfertigung und den Zusammenbau eines solchen Druckanzeigers beträchtlich. Die Metallteile müssen physiologisch unbedenklich sein und aus einem entsprechenden, zumeist oberflächenveredelten Werkstoff bestehen, so daß sich die Herstellung des Druckanzeigers weiter verteuert.

Diese Druckanzeiger dienen nicht nur der Anzeige des Druckes in dem Innenraum des Kochgefäßes, sondern, in gewissem Umfang, auch zu dessen Sicherung, indem sie während des Kochvorganges eine unzulässige Drucküberschreitung anzeigen. Eine derartige Entlüftung ist auch bei Betriebsbeginn des Kochgefäßes erwünscht. Um die über dem Kochgut befindliche Luft durch Wasserdampf zu ersetzen, muß der Betriebsdruck des Kochgefäßes annähernd erreicht werden.

Die bekannten Druckanzeiger sind meist im Sicherheitsventil eingebaut und nur umständlich zu reinigen und zu warten; zumeist müssen sie zu diesem Zweck in ihre Bestandteile zerlegt werden, passendes Werkzeug und handwerkliches Geschick sind erforderlich.

Die Erfindung hat sich die Aufgabe gestellt, einen Druckanzeiger der eingangs näher bezeichneten Art zu schaffen, der - kostensparend - sehr einfach und anwenderfreundlich aufgebaut ist.

Erfindungsgemäß wird die Aufgabe mit den Merkmalen des Anspruches 1 gelöst.

Von dem Anzeigestift abgesehen, besteht demzufolge der Druckanzeiger im günstigsten Fall nur mehr aus einem einzigen Haltestück, dessen Elastizität ausreicht, um es ohne zusätzliche Bauelemente, etwa einer Schraubverbindung oder dergleichen, an der Gefäßwand befestigen zu können, bei Überlastung von dem Innendruck des Klochgefäßes her den Anzeigestift durch die hintere Stirnwand zu treiben, bis der Steuerflansch an dem äußeren Anschlag anliegt, und auch den Anzeigestift in der Gegenrichtung, wiederum unter Überwindung der hinteren Stirnwand, manuell in seine vorige Betriebsstellung zurückzustellen. Wie noch zu zeigen sein wird, ist es ferner ohne Schwierigkeiten möglich, den Anzeigestift an dem in situ verbleibenden Haltestück zu wechseln, ohne daß es dazu eines Werkzeuges oder besonderer Fertigkeit bedürfte.

Die erforderliche Kontraktion des Rohrstückes ist in einfacher Weise erreichbar, wenn dieses den Anzeigestift koaxial umgebend als Wellrohr ausgebildet ist. Das Rohrstück besteht zweckmäßig aus einem solchen Werkstoff und ist so dimensioniert, daß es seiner axialen Verkürzung einen als Rückstellkraft wirksamen Verformungswiderstand entgegensetzt. Bei einer solchen Gestaltung wirkt das Rohrstück selbst als Rückstellfeder, wie sie bei einem mechanischen Druckregler durchweg erforderlich ist, als der der Druckanzeiger während des Kochprozesses dient.

Stattdessen kann es auch angebracht sein, daß eine zwischen dem Befestigungsstück und dem Stirnstück eingespannte Rückstellfeder als separates Bauelement zur Erzeugung der Rückstellkraft vorgesehen ist. Sie wird zweckmäßig koaxial zu dem Rohrstück angeordnet und kann sowohl über dem Rohrstück als auch innerhalb des Rohrstückes vorgesehen sein, so daß sie in beiden Fällen einer zylindrischen Führung unterliegt, die noch verbessert werden kann, wenn sich an dem Befestigungsstück und/oder dem Stirnstück ein Führungsbund für die Rückstellfeder befindet, so daß deren beiderseitige Enden radial arretiert sind. Hierbei kann es vorteilhaft sein, wenn das Rohrstück von dem Befestigungsstück und/oder dem Stirnstück getrennt angefertigt ist; es kann aber ohne weiteres auch so eingerichtet werden, daß die Rückstellfeder bei der Herstellung des Haltestückes in dieses integriert wird, so daß praktisch wiederum ein einziges Funktionselement entsteht. In jedem Falle ist die Ausführung so getroffen, daß das Haltestück einschließlich der Rückstellfeder eine nicht zerlegbare Baueinheit bildet, so daß sie sich funktional von der vorigen Ausführung nicht unterscheidet.

Es ist zweckmäßig, wenn die Rückstellfeder als kreiszylindrische metallische Schraubenfeder ausgebildet ist.

Der Druckanzeiger kann in einfacher Weise in der Gefäßwand befestigt werden, wenn das Befestigungsstück elastisch ausgebildet ist und auf seinem äußeren Umfang eine umlaufenden Ringnut eingetieft ist, welche die Berandung der Durchführung abdichtend überfängt. Die Elastizität des Werkstoffes des Haltestückes ermöglicht es, das Befestigungsstück einfach in die Durchführung einzudrücken, bis die Ringnut in die Berandung der Durchführung einrastet, sie ist auch Gewähr dafür, daß die Verbindung des Haltestückes mit der Gefäßwand dicht genug erfolgt - bei zunehmendem Druck im Innenraum des Kochgefäßes steigt die Dichtkraft entsprechend, so daß die Dichtwirkung noch zunimmt. Eine gesonderte Dichtung ist bei der erfindungsgemäßen Anordnung deshalb nicht vonnöten. Es kann lediglich geboten sein, in üblicher konstruktiver Ausbildung an dem Befestigungsstück einen Einführkegel vorzusehen, um die Einführung des Haltestückes in die Durchführung zu erleichtern.

In der vorderen Stirnwand des Haltestückes können die Dampfaustrittsöffnungen in Form von mehreren, auf einem Teilkreis verteilten Durchgangsbohrungen ausgeführt sein, die so angeordnet sind, daß sie auch bei an dem äußeren Anschlag anliegendem, den Schaft bundartig abschließenden Steuerflansch die strömungstechnische Verbindung zwischen dem Innenraum des Rohrstückes und der Umgebung gewährleisten. Es besteht also die fortwährende strömungstechnische Verbindung zwischen dem Inneren des Rohrstückes und der Umgebung unabhängig von der Stellung des Anzeigestiftes und dessen Steuerflansch. Befindet sich dieser an der vorderen Stirnwand, ist deshalb auch der Innenraum des Kochgefäßes mit der Umgebung strömungsverbunden, weil dann die Öffnungen auch der hinteren Stirnwand unverschlossen bleiben. Ein unzulässig hoher Druck im Innenraum des Kochgefäßes wird auf diese Weise nicht nur durch den weit herausgetriebenen Anzeigestift angezeigt, sondern er wird gleichzeitig auch wieder abgebaut.

Bei einer besonders bevorzugten Ausführung des erfindungsgemäßen Druckanzeigers ist der Steuerraum des Stirnstückes stirnseitig von der hinteren Stirnwand des Haltestückes und einer an dem Rohrstück angeschlossenen Hubbegrenzung für den Anzeigestift umgeben, wobei die Hubbegrenzung von mehreren am Umfang des Rohrstückes verteilten und dort angeschlossenen Haltestegen gebildet werden kann, an denen der Steuerflansch anschlägt; in einfacher und zweckentsprechender Ausbildung sind die Haltestege radial zu der Längsachse des Druckanzeigers gerichtet und frei endend.

Der Anzeigestift kann deshalb zwischen der Anlage einer Endfläche seines Steuerflansches an den Haltestegen und derjenigen einer der Endfläche entgegengerichteten Ringbundfläche des Steuerflansches bewegt werden, wobei im ersten Falle wie bereits erläutert der Innenraum des Kochgefäßes mit der Umgebung strömungsverbunden ist, beispielsweise bei Beginn des Kochvorganges oder bei von Hand gegen den Druck im Innenraum des Kochgefäßes betätigtem Anzeigestift, während die andere Position während des gesamten Kochvorganges eingenommen wird, wobei der Innenraum des Kochgefäßes von der Umgebung strömungsgetrennt bleibt, es sei denn, der Anzeigestift wird durch Überdruck mit seinem Steuerflansch an der vorderen Stirnwand angelegt. Die Haltestege erlauben es, den Steuerflansch des Anzeigestiftes bei geöffnetem Kochgefäß durch die Hubbegrenzung zu drücken, so daß dieser entnommen werden kann.

Es ist zweckmäßig, wenn in der hinteren Stirnwand eine Lagerbohrung für den Anzeigestift so vorgesehen ist, daß das als zweite Öffnung dienende Lagerspiel den Innenraum des Rohrstückes mit dem Innenraum des Kochgefäßes strömungstechnisch verbindet, so lange der Steuerflansch nicht an der hinteren Stirnwand anliegt. Auf gesonderte Durchbrüche kann man auf diese Weise verzichten.

Eine einwandfrei Anzeige des Druckzustandes in dem Kochgefäß ist gewährleistet, wenn das freie, in die Umgebung weisende Schaftende des Anzeigestiftes bei entspanntem Druckanzeiger etwa bündig mit der außerhalb des Kochgefäßes befindlichen Stirnfläche des Haltestückes ist oder diese übersteht. Damit ist zusätzlich zu der Anzeigefunktion sichergestellt, daß der Schaft des Anzeigestiftes stets an zwei Stellen gelagert und leicht längsverschiebbar ist.

Die erfindungsgemäße Ausbildung des Druckanzeigers erlaubt es, daß das Haltestück einstückig ausgebildet ist und speziell aus einem gummielastischen Kunststoff bestehen kann. Auf diese Weise ist es spritzfähig und besonders rationell herstellbar.

Insgesamt stellt die Erfindung eine bemerkenswerte Vereinfachung der eingangs beschriebenen Druckanzeiger dar; eine Vielzahl von Funktionen - Ankochen, Kochen, Überdrucksicherung, Entlüften - kann mit einem Minimum von einfach gehaltenen, rationell herstell- und montierbaren Bauteilen ausgeführt werden. Der Druckanzeiger ist ohne Fachkenntnisse schnell und sicher zu reinigen. Sein außerhalb des Kochgefäßes sichtbares Volumen ist klein, läßt sich auf einen schmalen, den Anzeigestift einfassenden Ring (des Befestigungsstückes) reduzieren und kann deshalb unauffällig und formschön ausgebildet werden.

Die Erfindung wird nachstehend an Hand der Zeichnung an einem Ausführungsbeispiel näher erläutert. Es zeigen
- Fig. 1: einen erfindungsgemäßen, in einem Kochgefäß eingebauten Druckanzeiger in einer ersten Ausführung in drei - verschiedene Betriebszustände veranschaulichende - Teilfiguren a bis c mit je einer längsgeschnittenen Vorderansicht sowie jeweils einer zugehörigen Drauf- und Druntersicht,
- Fig. 2: den Druckanzeiger aus Fig.1, zerlegt,
- Fig. 3 und Fig.4: eine zweite und eine dritte Ausführung des Druckanzeigers im gleichen Schema der Darstellung wie in der Fig.1.

Richtungspfeile verdeutlichen die Strömungen von Luft oder Wasserdampf durch den Druckanzeiger und deren jeweilige Strömungsrichtung.

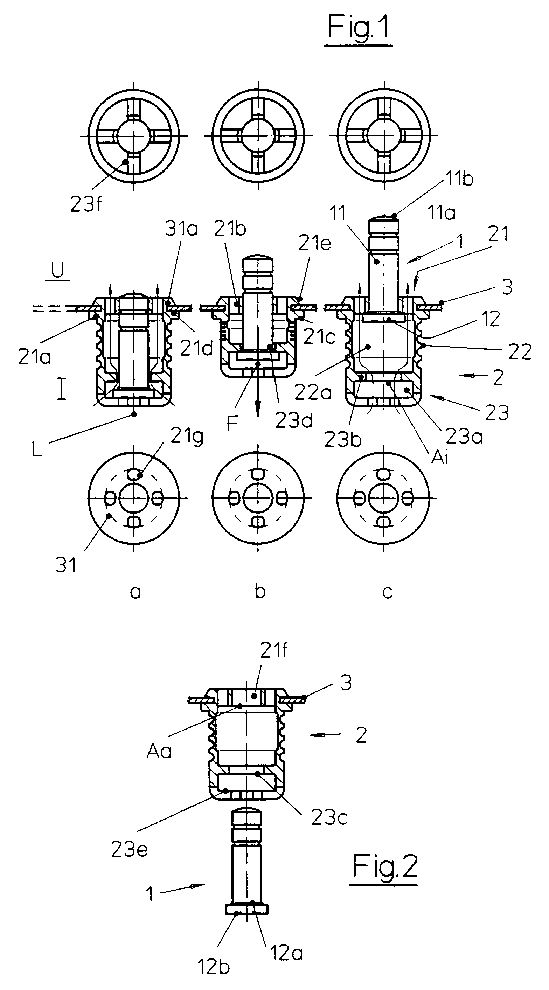

Der Druckanzeiger entsprechend der Erfindung besteht in seiner ersten Ausführung entsprechend den Fig.1 und 2 im wesentlichen aus einem Anzeigestift 1 und einem Haltestück 2. Der Anzeigestift 1 ist während des Betriebs in geeigneter, noch zu beschreibender Weise in dem Haltestück 2 festgehalten. Das Haltestück 2 seinerseits ist in einer Gefäßwand 3 eines aus einem Topf oder dergleichen und einem mit diesem verriegelbaren Deckel bestehenden Kochgefäßes ortsfest gehalten; die Gefäßwand 3 ist in der Zeichnung lediglich angedeutet.

Es ist üblich, den Druckanzeiger in dem Deckel des Kochgefäßes vorzusehen. Der Druckanzeiger verbindet bei verrie geltem Deckel strömungstechnisch den Innenraum I des Kochgefäßes mit dessen Umgebung U.

Der kreiszylindrische Anzeigestift 1 setzt sich einstückig aus einem Schaft 11 und einem mit einem etwas größeren Durchmesser an dem Schaft 11 anschließenden, im Betrieb auf der nach dem Innenraum I des Kochgefäßes weisenden Seite des Schaftes 11 angeordneten Steuerflansch 12 zusammen. Zwei in dem Schaft 11 befindliche Rillen 11a lassen das Maß deutlich werden, um das der Anzeigestift 1 die Gefäßwand 3 übersteht und das einen Hinweis auf den Betriebszustand, insbesondere den Druck im Innenraum I des Kochgefäßes, erlaubt. Die Anordnung ist so getroffen, daß das dem Steuerflansch 12 entgegengerichtete, freie Schaftende 11b des Schaftes 11 auch bei drucklosem Kochgefäß, zumindest geringfügig, stets oberhalb der Gefäßwand 3 verbleibt.

Das rotationssymmetrische Haltestück 2 besteht einstückig aus einem die Verbindung mit dem Gefäßboden 3 herstellenden Befestigungsstück 21, einem von dem Befestigungsstück 21 nach dem Innenraum I des Kochgefäßes hin abragenden Rohrstück 22, das den Schaft 11 des Anzeigestiftes 1 überfängt und von dem Innenraum I des Kochgefäßes scheidet, und einem an dem Rohrstück 22 auf dessen dem Befestigungsstück 21 abgewandter Seite anschließenden und den Innenraum 22a des Rohrstückes 22 von dem Innenraum I des Kochgefäßes räumlich trennenden Stirnstück 23, das einem Steuerraum 23a umfängt, in dem sich bei Regelbetrieb der Steuerflansch 12 befindet.

Das Befestigungsstück 21 besteht einstückig aus einem ringförmigen Kragenbund 21a und einer vorderen, der Umgebung U zugewandten Stirnwand 21b des Haltestückes 2, an der (Fig.2) ein erster, äußerer Anschlag Aa für den Steuerflansch 12 ausgebildet ist und den Innenraum 22a des Rohrstückes 22 auf einer Seite begrenzt. An dem Kragenbund 21a ist auf dem äußeren Umfang 21c des Befestigungsstückes 21 eine umlaufende rillenartige Ringnut 21d vorgesehen, die über die Berandung 31a einer Durchführung 31 in der Gefäßwand 3 gezogen ist, das gesamte Haltestück 2 auf diese Weise an der Gefäßwand 3 sicher arretierend.

Es versteht sich, daß eine derartige Lageverbindung bei einem einstückigen Haltestück 2 nur dann erreichbar ist, wenn dieses aus einem elastischen Werkstoff besteht; insbesondere ist dafür ein silikongummiartiger Werkstoff geeignet. Eine solche Verbindung ist im Betrieb völlig stabil, weil auch bei hohem Druck im Innenraum I des Kochgefäßes an dem Haltestück 2 nur eine geringe, nach außerhalb des Kochgefäßes gerichtete Druckkraft wirksam ist auf Grund der wegen der erfindungsgemäßen Bauweise nur kleinen druckbeaufschlagten Fläche an dem Haltestück 2. Bei zunehmendem Druck im Innenraum I des Kochgefäßes nimmt bei einem solchen Werkstoff die Dichtkraft im Bereich der Berandung 31a zu, so daß auf eine gesonderte gummielastische Dichtung verzichtet werden kann. Um die Einführung des Kragenbundes 21a bis zum Einrasten der Ringnut 21d in die Brandung 31a zu erleichtern, ist an dem Befestigungsstück 21 noch ein Einführkegel 21e angeformt.

In der Stirnwand 21b befindet sich (Fig.2) eine mittige, erste Lagerbohrung 21f für die radiale Lagerung des Schaftes 11 des Anzeigestiftes 1. Die zum Innenraum 22a des Rohrstückes 22 hin gerichtete Seite der Stirnwand 21b wird für den äußeren Anschlag Aa für den Steuerflansch 12 verwendet. Die Stirnwand 21b ist von ersten Dampfaustrittsöffnungen 21g durchbrochen, welche die Umgebung U mit dem Innenraum 22a des Rohrstückes 22 strömungstechnisch verbinden und von dem an dem äußeren Anschlag Aa anschlagenden Steuerflansch 12 verschlossen werden. Sie sind als auf einem zu der Längsachse L der Druckanzeige koaxialen Teilkreis angeordneten Ring von zu der Längsachse L achsparallelen Durchgangsbohrungen ausgeführt.

Das mit dem Befestigungsstück 21 einstückig verbundene, koaxiale und nach dem Innenraum I des Kochgefäßes hin abragende Rohrstück 22 ist als Wellrohr ausgebildet, so daß es unter dem Einfluß des Druckes in dem Innenraum I gegen die Wirkung einer Rückstellkraft F kontrahieren und sich unter der Wirkung der Rückstellkraft F wieder ausdehnen kann. Die Rückstellkraft F wird hier von der Eigenelastizität des Rohrstückes 22 aufgebracht.

Das dem Befestigungsstück 21 gegenüberliegende Stirnende des Rohrstückes 22 wird von dem Stirnstück 23 mit einem zu dem Innenraum 22a des Rohrstückes 22 hin gerichteten hinteren Stirnwand 23b abgeschlossen, die diesen Innenraum 22a von dem Steuerraum 23a räumlich scheidet und deren dem Innenraum 22a abgewandte Seite als innerer Anschlag Ai für eine an den Schaft 11 anschließende Ringbundfläche 12a (Fig.2) des Steuerflansches 12 verwendet wird.

In der zu der Längsachse L koaxialen hinteren Stirnwand 23b befindet sich eine mittige, zweite Lagerbohrung 23c für den Schaft 11 des Anzeigestiftes 1, der auf diese Weise leicht längsbeweglich sicher gelagert ist. Zwischen der Lagerbohrung 23c und dem Schaft 11 ist ein Lagerspiel von einer solchen Größe vorgesehen, daß ein als zweite Öffnung 23d verwendbarer Ringspalt verbleibt, der für eine Strömungsverbindung zwischen dem Steuerraum 23a und dem Innenraum 22a ausreicht. Die Stirnwand 23b ist elastisch genug, daß sie, eine entsprechende Stellkraft vorausgesetzt, von dem Steuerflansch 12 in beiden axialen Richtungen überwunden werden kann. Eine solche Stellkraft kann einmal vom Druck im Innenraum I des Kochgefäßes aufgebracht werden, so daß der Steuerflansch 12 in den Innenraum 22a gelangt, und zum anderen kann sie manuell in der Gegenrichtung ausgeübt werden, um entweder den Anzeigestift 1 soweit zurückzustellen, daß sich der Steuerflansch 12 erneut in dem Steuerraum 23a befindet, oder den Steuerflansch 12 von dem inneren Anschlag Ai abzuheben und das Kochgefäß zu entlüften.

Die zweite Öffnung 23d ist bei an dem Anschlag Ai anliegenden Steuerflansch 12 abgesperrt; sie wird sowohl bei der genannten manuellen Verstellung des Anzeigestiftes 1 als auch bei dessen selbsttätiger Rückstellung in Richtung des Innenraumes I geöffnet, wenn die Rückstellkraft F die Kraft aus dem dort anstehenden Druck überwiegt. Dies ist insbesondere bei Betriebsbeginn der Fall, wo der Druck im Innenraum I erst aufgebaut wird. Auf diese Weise wird das geschlossene Kochgefäß bei beginnender Beheizung rasch entlüftet und mit Wasserdampf gefüllt, bevor der Druck soweit angestiegen ist, daß der Steuerflansch 12 an dem inneren Anschlag Ai anliegt und den Innenraum I von der Umgebung U pneumatisch trennt.

Der Steuerflansch 12 bleibt so lange an dem Anschlag Ai angelegt, wie der Druck im Innenraum I einen vorgegebenen zulässigen Betriebsdruck nicht übersteigt; währenddessen bleibt das Rohrstück 22 unverändert (diese Stellung des Anzeigestiftes 1 ist in der Zeichnung weggelassen) oder wird mehr oder weniger komprimiert, ohne daß der Steuerflansch 12 die hintere Stirnwand 23b zu durchbrechen vermag. Dies erfolgt erst bei noch weiter ansteigendem, nicht zulässigem Druck.

Eine dem Schaft 11 abgewandte, der Ringbundfläche 12a entgegengerichtete freie Endfläche 12b (Fig.2) des Steuerflansches 12 liegt bei drucklosem Innenraum I oder bei geringem Druck während des Ankochens an einer Hubbegrenzung 23e an, die den Steuerraum 23a auf dessen der hinteren Stirnwand 23b gegenüberliegenden Seite begrenzt. Es ist zu erkennen, daß die Hubbegrenzung 23e von vier symmetrisch angeordneten Haltestegen 23f gebildet wird, die einerseits an dem Rohrstück 22 anschließen und andererseits radial zu der Längsachse L gerichtet frei enden. Auf diese Weise ist es zum einen möglich, den Anzeigestift 1 aus dem Haltestück 2 völlig herauszudrücken, und zum anderen ist eine beständige strömungstechnische Verbindung zwischen dem Steuerraum 23a und dem Inneren I des Kochgefäßes gewährleistet, unabhängig von der Stellung des Anzeigestiftes 1.

In der Ausführung der Fig.1 und 2 wird die Rückstellkraft F wie gesagt durch die Eigenelastizität des Rohrstückes 22 aufgebracht. Es ist darüberhinaus aber auch möglich, daß diese Rückstellkraft F von einer separaten Rückstellfeder 4 erzeugt werden kann, wenn diese bei der Kontraktion des Rohrstückes 22 ebenfalls zusammengedrückt wird.

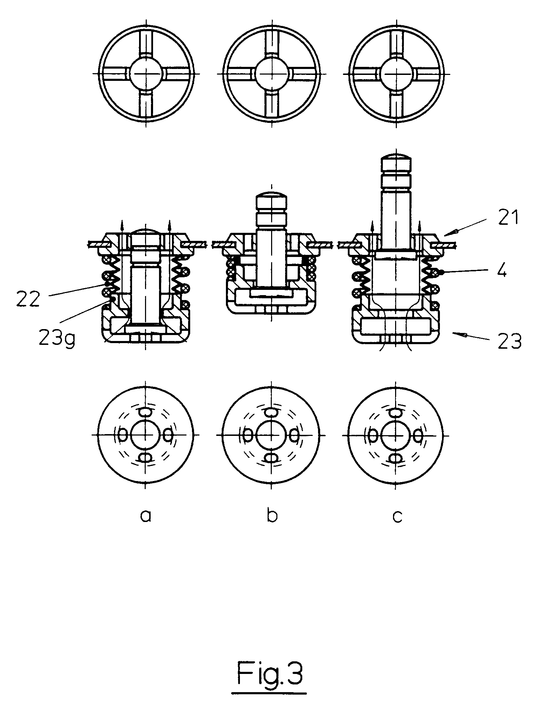

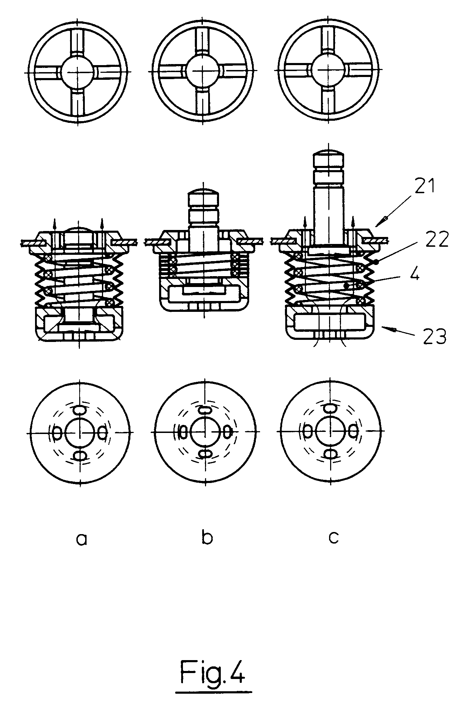

In der Anordnung der Fig.3 ist eine derartige Rückstellfeder 4 konzentrisch außerhalb, in der Fig.4 konzentrisch innerhalb des Rohrstückes 22 vorgesehen und zwischen dem Befestigungsstück 21 und dem Stirnstück 23 eingespannt. Es ist dabei durchaus möglich, die Rückstellfeder 4 bereits bei der Anfertigung des Haltestückes 2 zu berücksichtigen, so daß dieses nach wie vor einstückig ausgeführt werden kann.

Bei der Ausführung entsprechend der Fig.3 ist an dem Stirnstück 23 ein Führungsbund 23g so angebracht, daß das darübergestreifte eine Ende der Rückstellfeder 4 radial geführt ist. Ein ähnlicher Führungsbund kann auch an dem Befestigungsstück 21 zweckmäßig sein.

Die Wirkungsweise des erfindungsgemäßen Druckanzeigers kann im wesentlichen dem vorher Gesagten entnommen werden. In den Fig.1, 3 und 4 sind in den jeweiligen Teilfiguren a bis c jeweils die wichtigsten Betriebszustände des Druckanzeigers dargestellt. Dabei entsprechen die Teilfiguren a dem völlig entlasteten oder nur gegen einen geringfügigen Druck, beispielsweise beim Ankochen, im Innenraum I des Kochgefäßes arbeitenden Gerät: der Anzeigestift 1 liegt mit seinem Steuerflansch 12 an der Hubbegrenzung 23e an, so daß beide Öffnungen 21g,23d unverschlossen sind und der Innenraum I mit der Umgebung U pneumatisch verbunden ist. Das Kochgefäß kann bei diesem Betriebszustand durch Entriegeln des zugehörigen Deckels geöffnet werden.

Bei zunehmendem statischen Druck im Innenraum I steigt auch der Strömungsdruck auf die Endfläche 12b des Steuerflansches 12 und verschiebt diesen, bis seine Ringbundfläche 12a an dem inneren Anschlag Ai anliegt: die Öffnung 23d wird geschlossen, der Innenraum I abgesperrt, und bei erhöhtem Druck erfolgt die Gare des Kochgutes in dem Kochgefäß. Dabei kann mit weiter zunehmendem Druck das Rohrstück 22 zusammengedrückt werden, wie das, in Fig.3 und 4 einschließlich der Rückstellfeder 4, in den Teilfiguren b veranschaulicht ist. Der Schaft 11 ragt nun aus dem Befestigungsstück 21 heraus, seine Rillen 11a werden mehr oder weniger sichtbar und der Betreiber wird veranlaßt, gegebenenfalls die Energiezufuhr zu dem Kochgefäß zu drosseln.

Weiterhin zunehmender Druck im Innenraum I sorgt dafür, daß der Steuerflansch 12 durch die hintere Stirnwand 23b hindurchgedrückt wird, nunmehr mit seiner Ringbundfläche 12a an dem äußeren Anschlag Aa anliegt und der Schaft 11 gänzlich das Befestigungsstück 21 überragt. Nunmehr ist die Lagerbohrung 23c völlig geöffnet, und der anstehende Überdruck wird über die ersten Öffnungen 21g abgebaut, die von dem Steuerflansch 12 nicht verschließbar sind.

In den Stellungen des Anzeigestiftes 1 in den Teilfiguren b und c ist es nicht möglich, das Kochgefäß zu öffnen. Vielmehr muß dazu vorher ein Druckausgleich herbeigeführt werden, indem der Anzeigestift 1 von Hand in seine in den Teilfiguren a gezeigte Arbeitsstellung gebracht wird oder diese von selbst erreicht.

Wird der Anzeigestift 1 manuell noch weiter in Richtung auf das Innere I des Kochgefäßes bewegt, dann passiert der Steuerflansch 12 die Haltestege 23f unter Aufgabe der Hubbegrenzung 23e, so daß (Fig.2) der Anzeigestift 1 von dem Haltestück 2 getrennt ist, beispielsweise um die Teile zu reinigen. Er wird in der entgegengesetzten Richtung wieder eingesetzt, bis sein Steuerflansch 12 erneut innerhalb des Steuerraumes 23a befindlich und der Druckanzeiger betriebsbereit ist.

### Aufstellung der Bezugszeichen

- 1: Anzeigestift
- 11: Schaft
- 11a: Rille
- 11b: Schaftende
- 12: Steuerflansch
- 12a: Ringbundfläche
- 12b: Endfläche
- 2: Haltestück
- 21: Befestigungsstück
- 21a: Kragenbund
- 21b: (vordere) Stirnwand
- 21c: Umfang
- 21d: Ringnut
- 21e: Einführkegel
- 21f: (erste) Lagerbohrung
- 21g: (erste) Öffnung
- 22: Rohrstück
- 22a: Innenraum
- 23: Stirnstück
- 23a: Steuerraum
- 23b: (hintere) Stirnwand
- 23c: (zweite) Lagerbohrung
- 23d: (zweite) Öffnung
- 23e: Hubbegrenzung
- 23f: Haltesteg
- 23g: Führungsbund
- 3: Gefäßwand
- 31: Durchführung
- 31a: Berandung
- 4: Rückstellfeder
- Aa: äußerer Anschlag
- Ai: innerer Anschlag
- F: Rückstellkraft
- I: Innenraum
- L: Längsachse
- U: Umgebung

## Patentansprüche

1. Druckanzeiger für ein Kochgefäß oder dergleichen, beispielsweise einen Dampfdrucktopf, mit einem Anzeigestift (1), der längsbeweglich in einem Haltestück (2) angeordnet ist und das Haltestück (2) aus einem Befestigungsstück (21), einem von dem Befestigungsstück (21) abragenden Rohrstück (22) und einem das Rohrstück (22) abschließenden Stirnstück (23) zusammengesetzt ist, wobei der Anzeigestift (1) aus einem Schaft (11) und einem Steuerflansch (12) besteht und in einer als äußerer Anschlag (Aa) dienenden vorderen Stirnwand (21b) in dem Befestigungsstück (21) und ferner in dem Stirnstück (23) in einer als innerer Anschlag (Ai) dienenden hinteren Stirnwand (23b) gelagert ist, wobei die Stirnwände (21b,23b) von Öffnungen (21g,23d) durchbrochen sind, die durch den anschlagenden Steuerflansch (12) entweder verschlossen (23d) oder nicht beeinflußt (21g) werden, die hintere Stirnwand (23b) elastisch ausgebildet ist und der innere Anschlag (Ai) in beiden Richtungen von dem Steuerflansch (12) überwindbar und an dem Stirnstück (23) eine Hubbegrenzung (23e) für den Steuerflansch (12) vorgesehen ist, dadurch gekennzeichnet, daß das Rohrstück (22) längselastisch ausgebildet ist und aus einem solchen Werkstoff besteht und so dimensioniert ist, daß es seiner axialen Verkürzung einen als Rückstellkraft (F) wirksamen Verformungswiderstand entgegensetzt.

2. Druckanzeiger nach Anspruch 1, dadurch gekennzeichnet, daß das den Anzeigestift (1) koaxial umgebende Rohrstück (22) als Wellrohr ausgebildet ist.

3. Druckanzeiger nach Anspruch 1 oder 2, dadurch gekennzeichnet, daß eine zwischen dem Befestigungsstück (21) und dem Stirnstück (23) eingespannte Rückstellfeder (4) vorgesehen ist.

4. Druckanzeiger nach Anspruch 3, dadurch gekennzeichnet, daß die Rückstellfeder (4) koaxial zu dem Rohrstück (22) angeordnet ist.

5. Druckanzeiger nach Anspruch 3 oder 4, dadurch gekennzeichnet, daß die Rückstellfeder (4) über dem Rohrstück (22) vorgesehen ist.

6. Druckanzeiger nach Anspruch 3 oder 4, dadurch gekennzeichnet, daß die Rückstellfeder (4) innerhalb des Rohrstückes (22) vorgesehen ist.

7. Druckanzeiger nach einem der Ansprüche 3 bis 6, dadurch gekennzeichnet, daß sich an dem Befestigungsstück (21) und/oder dem Stirnstück (23) ein Führungsbund (23g) für die Rückstellfeder (4) befindet.

8. Druckanzeiger nach einem der Ansprüche 3 bis 7, dadurch gekennzeichnet, daß die Rückstellfeder (4) als kreiszylindrische metallische Schraubenfeder ausgebildet ist.

9. Druckanzeiger nach einem der Ansprüche 1 bis 8, dadurch gekennzeichnet, daß das Befestigungsstück (21) elastisch ausgebildet ist und auf seinem äußeren Umfang (21c) eine umlaufenden Ringnut (21d) eingetieft ist, welche eine Berandung (31a) einer Durchführung (31) abdichtend überfängt.

10. Druckanzeiger nach einem der Ansprüche 1 bis 9, dadurch gekennzeichnet, daß in der vorderen Stirnwand (21b) des Haltestückes (2) die Öffnungen (21g) in Form von mehreren, auf einem Teilkreis verteilten Durchgangsbohrungen ausgeführt sind, die so angeordnet sind, daß sie auch bei an dem äußeren Anschlag (Aa) anliegendem, den Schaft (11) bundartig abschließendem Steuerflansch (12) die strömungstechnische Verbindung zwischen dem Innenraum (22a) des Rohrstückes (22) und der Umgebung (U) gewährleisten.

11. Druckanzeiger nach einem der Ansprüche 1 bis 10, dadurch gekennzeichnet, daß ein Steuerraum (23a) des Stirnstückes (23) stirnseitig von der hinteren Stirnwand (23b) des Haltestückes (2) und einer an dem Rohrstück (22) angeschlossenen Hubbegrenzung (23e) für den Anzeigestift (1) umgeben ist.

12. Druckanzeiger nach Anspruch 11, dadurch gekennzeichnet, daß die Hubbegrenzung (23e) von mehreren am Umfang des Rohrstückes (22) verteilten und dort angeschlossenen Haltestegen (23f) gebildet wird, an denen der Steuerflansch (12) anschlägt.

13. Druckanzeiger nach Anspruch 12, dadurch gekennzeichnet, daß die Haltestege (23f) radial zu der Längsachse (L) des Druckanzeigers gerichtet und frei endend sind.

14. Druckanzeiger nach einem der Ansprüche 1 bis 13, dadurch gekennzeichnet, daß in der hinteren Stirnwand (23b) eine Lagerbohrung (23c) für den Anzeigestift (1) so vorgesehen ist, daß das als zweite Öffnung (23d) dienende Lagerspiel den Innenraum (22a) des Rohrstückes (22) mit dem Innenraum (I) des Kochgefäßes strömungstechnisch verbindet, so lange der Steuerflansch (12) nicht an der hinteren Stirnwand (23b) anliegt.

15. Druckanzeiger nach einem der Ansprüche 1 bis 14, dadurch gekennzeichnet, daß das freie, in die Umgebung (U) weisende Schaftende (11b) des AnzeigestifteS (1) bei entspanntem Druckanzeiger etwa bündig mit der außerhalb des Kochgefäßes befindlichen Stirnfläche des Haltestückes (2) ist oder diese übersteht.

16. Druckanzeiger nach einem der Ansprüche 1 bis 15, dadurch gekennzeichnet, daß das Haltestück (2) einstückig ausgebildet ist.

17. Druckanzeiger nach einem der Ansprüche 1 bis 16, dadurch gekennzeichnet, daß das Haltestück (2) aus einem gummielastischen Kunststoff besteht.

## Claims

1. A pressure indicator for a cooking vessel or the like, for example a pressure cooker, comprising an indicator pin (1) arranged so as to be longitudinally displaceable in a holding member (2), and the holding member (2) being composed of a fixing member (21), a tubular member (22) projecting from the fixing member (21), and an end piece (23) closing the tubular member (22), wherein the indicator pin (1) comprises a shaft (11) and a control flange (12) and is mounted in the fixing member (21) in a front end wall (21b) acting as an outer stop (Aa) and is also mounted in the end piece (23) in a rear end wall (23b) acting as an inner stop (Ai), wherein the end walls (21b, 23b) are pierced by openings (21g, 23d) which are either closed (23d) by the abutting control flange (12) or are not affected (21g), the rear end wall (23b) is resiliently formed and the inner stop (Ai) is surmountable in both directions by the control flange (12), and a stroke limiter (23e) for the control flange (12) is provided on the end piece (23), characterised in that the tubular member (22) is formed so as to be longitudinally elastic and comprises such a material and is so dimensioned that a deformation resistance acting as a restoring force (F) opposes its axial shortening.

2. A pressure indicator according to claim 1, characterised in that the tubular member (22) co-axially surrounding the indicator pin (1) is formed as a corrugated tube.

3. A pressure indicator according to claim 1 or 2, characterised in that a restoring spring (4) is provided and is clamped between the fixing member (21) and the end piece (23).

4. A pressure indicator according to claim 3, characterised in that the restoring spring (4) is arranged co-axially with the tubular member (22).

5. A pressure indicator according to claim 3 or 4, characterised in that the restoring spring (4) is arranged over the tubular member (22).

6. A pressure indicator according to claim 3 or 4, characterised in that the restoring spring (4) is arranged inside the tubular member (22).

7. A pressure indicator according to any one of claims 3 to 6, characterised in that a guide collar (23g) for the restoring spring (4) is provided on the fixing member (21) and/or the end piece (23).

8. A pressure indicator according to any one of claims 3 to 7, characterised in that the restoring spring (4) is formed as a circular cylindrical, metal helical spring.

9. A pressure indicator according to any one of claims 1 to 8, characterised in that the fixing member (21) is resiliently formed and is provided on its outer circumference (21c) with a circumferential annular groove (21d) which covers an edge (31a) of a duct (31) so as to provide a seal.

10. A pressure indicator according to any one of claims 1 to 9, characterised in that the openings (21g) are provided in the front end wall (21b) of the holding member (2) in the form of a plurality of through bores distributed over a reference circle and arranged in such a manner that they ensure the fluidic connection between the interior (22a) of the tubular member (22) and the environment (U), even when the control flange (12) is resting against the outer stop (Aa) and closing the shaft (11) in the manner of a collar.

11. A pressure indicator according to any one of claims 1 to 10, characterised in that the end of a control chamber (23a) of the end piece (23) is enclosed by the rear end wall (23b) of the holding member (2) and by a stroke limiter (23e) connected to the tubular member (22) and provided for the indicator pin (1).

12. A pressure indicator according to claim 11, characterised in that the stroke limiter (23e) is formed by a plurality of retaining ribs (23f) which are distributed over the circumference of the tubular member (22) and are connected thereto and against which the control flange (12) abuts.

13. A pressure indicator according to claim 12, characterised in that the retaining ribs (23f) extend radially to the longitudinal axis (L) of the pressure indicator and end freely.

14. A pressure indicator according to any one of claims 1 to 13, characterised in that a mounting bore (23c) for the indicator pin (1) is provided in the rear end wall (23b) so that the mounting clearance, acting as a second opening (23d), fluidically connects the interior (22a) of the tubular member (22) to the interior (I) of the cooking vessel as long as the control flange (12) is not resting against the rear end wall (23b).

15. A pressure indicator according to any one of claims 1 to 14, characterised in that the free shaft end (11b) of the indicator pin (1) - extending into the environment (U) - is substantially flush with the end surface of the holding member (2) arranged outside the cooking vessel or projects beyond it when the pressure indicator is in the unpressurised state.

16. A pressure indicator according to any one of claims 1 to 15, characterised in that the holding member (2) is formed in one piece.

17. A pressure indicator according to any one of claims 1 to 16, characterised in that the holding member (2) comprises a rubber-like plastics.

## Revendications

1. Indicateur de pression pour un récipient de cuisson ou analogue, par exemple un autocuiseur, pourvu d'une broche indicatrice (1) qui est placée dans une pièce de maintien (2) avec possibilité de se déplacer longitudinalement et la pièce de maintien (2) est composée d'une pièce de fixation (21), d'une pièce tubulaire (22) dépassant de la pièce de fixation (21) et d'une pièce d'extrémité (23) fermant la pièce tubulaire (22), la broche indicatrice (1) étant composée d'une tige (11) et d'une bride de commande (12) et étant logée dans une paroi d'extrémité avant (21b) servant de butée extérieure (Aa) dans la pièce de fixation (21) et, en outre, dans la pièce d'extrémité arrière (23) servant de butée intérieure (Ai), les parois d'extrémité (21b, 23b) étant percées d'ouvertures (21g, 23d) qui sont soit fermées (23d), soit non influencées (21g) par la bride de commande (12) venant en butée, la paroi d'extrémité arrière (23b) ayant une forme élastique et la butée intérieure (Ai) étant prévue franchissable dans les deux sens par la bride de commande (12) et une limitation de levée pour la bride de commande (12) étant prévue sur la pièce d'extrémité (23), caractérisé en ce que la pièce tubulaire (22) a une forme élastique en longueur et est composée d'un matériau tel et dimensionnée de manière telle qu'elle oppose à son raccourcissement axial une résistance à la déformation qui agit comme force de rappel (F).

2. Indicateur de pression selon la revendication 1, caractérisé en ce que la pièce tubulaire (22) entourant coaxialement la broche indicatrice (1) a la forme d'un tube ondulé.

3. Indicateur de pression selon la revendication 1 ou 2, caractérisé en ce qu'il est prévu un ressort de rappel (4) tendu entre la pièce de fixation (21) et la paroi d'extrémité (23).

4. Indicateur de pression selon la revendication 3, caractérisé en ce que le ressort de rappel (4) est placé coaxialement à la pièce tubulaire (22).

5. Indicateur de pression selon la revendication 3 ou 4, caractérisé en ce que le ressort de rappel (4) est prévu sur la pièce tubulaire (22).

6. Indicateur de pression selon la revendication 3 ou 4, caractérisé en ce que le ressort de rappel (4) est prévu à l'intérieur de la pièce tubulaire (22).

7. Indicateur de pression selon l'une des revendications 3 à 6, caractérisé en ce qu'il se trouve, sur la pièce de fixation (21) et/ou la pièce d'extrémité (23), une collerette de guidage (23g) pour le ressort de rappel (4).

8. Indicateur de pression selon l'une des revendications 3 à 7, caractérisé en ce que le ressort de rappel (4) a la forme d'un ressort à boudin métallique cylindrique circulaire.

9. Indicateur de pression selon l'une des revendications 1 à 8, caractérisé en ce que la pièce de fixation (21) a une forme élastique et est creusée à sa périphérie extérieure (21) d'une rainure circulaire (21d) qui recouvre de manière étanche un entourage de bordure (31a) d'une traversée (31).

10. Indicateur de pression selon l'un des revendications 1 à 9, caractérisé en ce que, dans la paroi d'extrémité avant (21b) de la pièce de maintien (2), les ouvertures (21g) sont exécutées sous forme de plusieurs perçages de passage répartis sur un cercle gradué, qui sont disposés de telle manière qu'ils assurent la liaison selon la technique des fluides entre l'espace intérieur (22a) de la pièce tubulaire (22) et l'environnement (U), également lorsque la bride de commande (12) fermant avec une collerette l'arbre (11) est en contact avec la butée extérieure (Aa).

11. Indicateur de pression selon l'une des revendications 1 à 10, caractérisé en ce qu'un espace de commande (23a) de la pièce d'extrémité (23) est entouré du côté de sa face arrière par la paroi d'extrémité arrière (23b) de la pièce de maintien (2) et par une limitation de levée (23e), raccordée à la pièce tubulaire (22), pour la broche indicatrice (1).

12. Indicateur de pression selon la revendication 11, caractérisé en ce que la limitation de levée (23e) est formée de plusieurs entretoises de maintien (23f) réparties à la périphérie de la pièce tubulaire (22) et raccordées à celle-ci, entretoises sur lesquelles vient buter la bride de commande (12).

13. Indicateur de pression selon la revendication 12, caractérisé en ce que les entretoises de maintien (23f) sont orientées radialement par rapport à l'axe longitudinal (L) de l'indicateur de pression et ont leurs extrémités libres.

14. Indicateur de pression selon l'une des revendications 1 à 13, caractérisé en ce qu'il est prévu, dans la paroi d'extrémité arrière (23b), un alésage de palier (23c) pour la broche indicatrice (1) de telle manière que le jeu du palier servant de deuxième ouverture (23d) relie l'espace intérieur (22a) de la pièce tubulaire (22) à l'espace intérieur (I) du récipient de cuisson selon la technique des fluides, tant que la bride de commande (12) n'est pas en contact avec la paroi d'extrémité arrière (23b).

15. Indicateur de pression selon l'une des revendications 1 à 14, caractérisé en ce que l'extrémité libre (116) de la broche indicatrice (1), regardant vers l'environnement (U), est à peu près à fleur ou dépasse de la surface d'extrémité de la pièce de maintien (2) qui se trouve à l'extérieur du récipient de cuisson, lorsque l'indicateur de pression est détendu.

16. Indicateur de pression selon l'une des revendications 1 à 15, caractérisé en ce que la pièce de maintien (2) est monobloc.

17. Indicateur de pression selon l'une des revendications 1 à 16, caractérisé en ce que la pièce de maintien (2) est en matière synthétique élastique caoutchouteuse.
